Europäisches Patentamt

European Patent Office

Office européen des brevets

(11) Veröffentlichungsnummer : **0 360 125 B1**

## (12) EUROPÄISCHE PATENTSCHRIFT

(45) Veröffentlichungstag der Patentschrift :
29.01.92 Patentblatt 92/05

(21) Anmeldenummer : **89116812.2**

(22) Anmeldetag : **12.09.89**

(51) Int. Cl.⁵ : **F16B 41/00, F16B 23/00**

(54) **Schraube mit Diebstahlsicherungskopf.**

(30) Priorität : **23.09.88 DE 3832359**

(43) Veröffentlichungstag der Anmeldung :
**28.03.90 Patentblatt 90/13**

(45) Bekanntmachung des Hinweises auf die
Patenterteilung :
**29.01.92 Patentblatt 92/05**

(84) Benannte Vertragsstaaten :
**AT CH FR GB IT LI**

(56) Entgegenhaltungen :
**DE-A- 3 148 565
DE-A- 3 150 434
DE-A- 3 542 228
GB-A- 1 478 992**

(73) Patentinhaber : **Schmidt, Reinhold
Talhauser Strasse 62
W-7801 Ebringen (DE)**

(72) Erfinder : **Schmidt, Reinhold
Talhauser Strasse 62
W-7801 Ebringen (DE)**

(74) Vertreter : **Vetter, Hans, Dipl.-Phys. Dr. et al
Patentanwalte Dipl.-Ing. Rudolf Magenbauer
Dipl.-Phys. Dr. Otto Reimold Dipl.-Phys. Dr.
Hans Vetter Hölderlinweg 58
W-7300 Esslingen (DE)**

**Beschreibung**

Die Erfindung betrifft eine Schraube mit Diebstahlsicherungskopf, der mit einer ein im wesentlichen zylindrisch ausgebildetes, von der Schraube ausgehendes Werkzeugansatzteil aufnehmenden Bohrung versehen ist.

Aus der DE-OS 3148565 ist eine derartige Schraube bekannt, bei der ein drehbar gelagerter, den Schraubenkopf umfassender Diebstahlsicherungskopf verhindert, daß die Schraube mittels einer Zange od.dgl. gedreht werden kann. Der in diesem Diebstahlsicherungskopf angeordnete und von oben zugängliche Schraubenkopf ist als Werkzeugansatzteil ausgebildet und weist zur Aufnahme von Zapfen eines Spezialwerkzeugs entsprechende Ausnehmungen auf. Der Nachteil der bekannten Anordnung besteht darin, daß das Spezialwerkzeug zum Lösen der Schraube sehr leicht nachgebaut werden kann, so daß der zu sichernde Gegenstand, beispielsweise eine Fahrzeugfelge, ein Kunstobjekt, ein Tresor od.dgl., nicht ausreichend geschützt ist. Darüber hinaus kann der dünnwandig ausgebildete Diebstahlsicherungskopf relativ leicht mit Gewalt entfernt werden, so daß der Schraubenkopf mittels einer Zange od.dgl. gelöst werden kann.

Der Erfindung liegt daher die Aufgabe zugrunde, eine Schraube mit einem Diebstahlsicherungskopf der eingangs genannten Gattung zu schaffen, der mit einem relativ einfach ausgestalteten Werkzeug gelöst werden kann und dennoch diebstahlsicher geschützt ist, wobei auch durch Gewaltanwendung kein Lösen der Schraube erzielt werden kann.

Diese Aufgabe wird erfindungsgemäß dadurch gelöst, daß im Diebstahlsicherungskopf im wesentlichen parallel neben der Bohrung wenigstens zwei drehbar gelagerte Stifte angeordnet sind, die jeweils mit einem in eine Ringnut am Werkzeugansatzteil durch Drehung des zugeordneten Stifts einschwenkbaren Sperrglied drehfest verbunden sind, wobei der obere, von außen zugängliche Endbereich der Stifte als Justierwerkzeug-Ansatzteil ausgebildet ist.

Durch diese Anordnung kann der Diebstahlsicherungskopf als massives Teil ausgebildet werden, indem lediglich neben der Bohrung für das Werkzeugansatzteil Bohrungen für die Stifte und für die Sperrglieder entsprechend geformte Ausfräsungen vorgesehen sein müssen. Hierdurch wird ein weitgehender Schutz gegen mechanische Beschädigungen erreicht. Zum Lösen des Diebstahlsicherungskopfes muß eine ganz bestimmte Stellung der Stifte am Justierwerkzeug-Ansatzteil eingestellt werden, damit die Sperrglieder außer Eingriff mit der Ringnut gelangen. Nur in dieser Stellung kann der Diebstahlsicherungskopf abgezogen und die Schraube über das Werkzeug-Ansatzteil gelöst werden. Da es nahezu beliebige Stellungskombinationen der Stifte gibt, ist das Auffinden der Entriegelungsposition nahezu unmöglich. In jeder Stellung der Stifte bzw. Sperrglieder ist der Diebstahlsicherungskopf drehbar am Werkzeug-Ansatzteil angeordnet, so daß eine Drehmomentübertragung auf die Schraube durch jegliches Werkzeug ausgeschlossen ist.

Durch die in den Unteransprüchen aufgeführten Maßnahmen sind vorteilhafte Weiterbildungen und Verbesserungen der im Anspruch 1 angegebenen Schraube möglich.

Besonders vorteilhaft ist die Ausbildung der Bohrung als Sackbohrung und insbesondere als Paßbohrung, da hierdurch zum einen jeglicher Zugriff auf das Werkzeug-Ansatzteil verhindert und die Stabilität des Diebstahlsicherungskopfs erhöht wird. Infolge der Paßbohrung ist ein seitliches Schwenken des Diebstahlsicherungskopfs auf dem Werkzeug-Ansatzteil ausgeschlossen, so daß ein Untergreifen mit einem Werkzeug verhindert werden kann. Das von der Schraube ausgehende Werkzeug-Ansatzteil ist entweder als Schraubenkopf selbst oder vorzugsweise als Fortsatz des Schraubenkopfes ausgebildet. Bildet man die Verbindungsstelle zwischen dem als Fortsatz ausgebildeten Werkzeug-Ansatzteil mit dem Schraubenkopf als Sollbruchstelle aus, so bricht das Werkzeugansatzteil bei größerer seitlicher Gewaltanwendung ab, und der Schraubenkopf kann nicht mehr gelöst werden, insbesondere dann, wenn er als mit der Befestigungsebene abschließender Senkkopf ausgebildet ist.

Steht der beispielsweise als Linsen-, Zylinder- oder Halbrundkopf ausgebildete Schraubenkopf über die Befestigungsebene über, so wird der Diebstahlsicherungskopf mit einer entsprechenden, den überstehenden Bereich des Kopfes aufnehmenden Ausnehmung versehen.

Die Sperrglieder sind zweckmäßigerweise als in entsprechenden Ausnehmungen im Diebstahlsicherungskopf gelagerte Scheiben ausgebildet, die je eine randseitige Aussparung aufweisen, wobei die Entriegelungsposition nur bei radial zur Drehachse des Diebstahlsicherungskopfs weisenden Aussparungen vorliegt. Insbesondere dann, wenn die Aussparungen einen Radius aufweisen, der im wesentlichen dem des Werkzeug-Ansatzteils entspricht, kann der Diebstahlsicherungskopf nur bei sehr exakter Winkeleinstellung aller Stifte gelöst werden. Bei Unkenntnis der richtigen Winkelcodierung ist damit ein unbefugtes Abnehmen des Diebstahlsicherungskopfs ausgeschlossen.

In vorteilhafter Weise sind in den Sperrgliedern Durchstecköffnungen für die Stifte vorgesehen, wobei die Durchstecköffnungen und die diesen im Querschnitt angepaßten Stifte einen von der Kreisform abweichenden Querschnitt aufweisen, der insbesondere als regelmäßiges Vieleck ausgebildet ist. Dadurch können die Stifte auf verschiedene Weise in die Sperrglieder eingesteckt werden, und es ergeben sich zusätzliche individuelle Codierungsmöglichkeiten.

Die Stifte sind zweckmäßigerweise mit einer ständig wirkenden Bremse versehen, die vorzugsweise als an allen Stiften anliegender Federring ausgebildet ist, der radial von innen in Ringnuten der Stifte eingreift. Hierdurch kann ein einziger Federring als Bremse für alle Stifte wirken, wodurch die Stifte in ihrer jeweiligen Position sicher festgelegt sind.

Das Justierwerkzeug-Ansatzteil an den Stiften ist vorzugsweise als im Diebstahlsicherungskopf versenkter Kopf ausgebildet, so daß ein gewaltsamer Zugriff verhindert wird. Dieser Kopf ist zum Eingriff durch ein Justierwerkzeug mit einer Justier-Vielkantöffnung versehen, die vorzugsweise nicht rotationssymmetrisch ausgebildet ist, so daß nur eine einzige Eingriffsmöglichkeit durch das Justierwerkzeug besteht. Das Justierwerkzeug selbst kann beispielsweise eine Markierung aufweisen, die mit einer entsprechenden Markierung am Diebstahlsicherungskopf in Übereinstimmung gebracht werden kann. Das Justierwerkzeug selbst enthält dadurch die Codierung.

Es ist jedoch auch möglich, daß der Kopf mit Codiermarkierungen für die Justierwerkzeug-Ansatzteile bzw. das Justierwerkzeug insbesondere mit Codierskalen versehen ist, oder daß eine entsprechende Markierungen tragende Codierscheibe vorgesehen ist. Hierdurch kann ein Codierwert als Zahlenwert ermittelt werden, indem von den jeweiligen Codierskalen die jeweilige Stellung der Markierung des Codierwerkzeugs abgelesen wird. Das Codierwerkzeug selbst sowie die Codierscheibe können als Bestandteile der Codierung ebenfalls Codierzahlen tragen, die zu denen des Ablesewerts hinzugefügt werden. Auf diese Weise ist durch Variation des Codierwerkzeugs und der Codierscheibe eine noch größere Vielzahl von Codierungen erreichbar.

An der von der Schraube abgewandten Seite des Diebstahlsicherungskopfs ist zweckmäßigerweise ein Abziehzapfen vorgesehen, der beispielsweise durch Eingriff eines Hakens ein Abziehen des Diebstahlsicherungskopfs nach Einstellung der Codierung gestattet. Dieser Abziehzapfen kann gleichzeitig als Zentriervorrichtung für die Codierscheibe dienen, die bei zylindrischer Ausbildung des Abziehzapfens noch einer zusätzlichen Justiervorrichtung zur winkelgerechten Einstellung bedarf.

Insbesondere bei einer Ausbildung des Diebstahlsicherungskopfs als kreiskegelstumpfförmiges, gehärtetes Stahlteil wird ein gewaltsamer Zugriff auf die Schraube wirksam verhindert. Zum Schutz gegen gewaltsame Einwirkung kann der Diebstahlsicherungskopf auch versenkt angeordnet sein, oder er wird von einem mit der Befestigungsebene fest verbundenen, insbesondere angeschweißten Schutzrohr umgeben.

Ein Ausführungsbeispiel der Erfindung ist in der Zeichnung dargestellt und in der nachfolgenden Beschreibung näher erläutert. Es zeigen :

Fig. 1    eine Schnittdarstellung der Schraube mit Diebstahlsicherungskopf im montierten und gesicherten Zustand,

Fig. 2    eine Draufsicht der in Fig. 1 dargestellten Anordnung,

Fig. 3    eine Seitenansicht eines Codierwerkzeugs,

Fig. 4    eine Ansicht des in Fig. 3 dargestellten Codierwerkzeugs von unten,

Fig. 5    eine Draufsicht auf eine z.T. Mündungen von Justierwerkzeug-Ansatzteilen zeigende Codier-Scheibe und

Fig. 6    eine Seitenansicht (teilweise im Schnitt) des in einem Schutzrohr angeordneten Diebstahlsicherungskopfs.

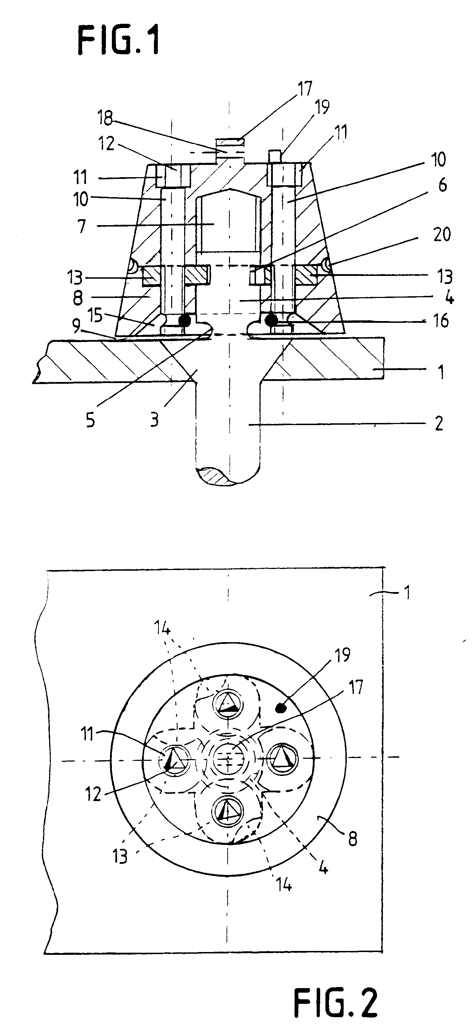

Gemäß den Fig. 1 und 2 weist eine in eine zu sichernde Platte 1 eingesetzte Senkkopfschraube 2 ein vom Senkkopf 3 ausgehendes zylindrisches Werkzeug-Ansatzteil 4 auf, wobei zwischen diesem Werkzeug-Ansatzteil 4 und der ebenen Oberseite des Senkkopfs 3 als Sollbruchstelle 5 ein Bereich mit verringertem Durchmesser angeordnet ist. Das Werkzeug-Ansatzteil 4 weist im mittleren Bereich an seinem Umfang eine Ringnut 6 auf, die auch beispielsweise im unteren Bereich angeordnet sein könnte. Der obere Bereich 7 des Werkzeug-Ansatzteils 4 ist zum Ansetzen eines Werkzeugs ausgebildet, um die Senkkopfschraube 2 anziehen und lösen zu können. Hierbei weist gemäß der Darstellung dieser obere Bereich 7 eine als Vielkantfläche ausgebildete Querschnittsfläche auf, insbesondere eine Sechskantfläche. Prinzipiell kann dieser obere Bereich 7 jedoch auch eine Bohrung zum Eingriff eines Vielkantschlüssels aufweisen. Die Vielkantfläche kann auch eine unregelmäßige Gestalt aufweisen, so daß ein Spezialwerkzeug erforderlich ist, das zur Erhöhung der Sicherheit beiträgt.

Ein auf das Werkzeug-Ansatzteil 4 aufsteckbarer Diebstahlsicherungskopf 8 besteht aus gehärtetem Stahl oder einem sonstigen harten bzw. widerstandsfähigen Material und besitzt eine Sackbohrung zur Aufnahme des Werkzeug-Ansatzteils 4 mit entsprechend ausgebildeter Dimensionierung, wobei ein möglichst geringes Spiel vorzusehen ist. Der eine kreiskegelstumpfförmige Gestalt aufweisende Diebstahlsicherungskopf 8 kann daher auf dem Werkzeug-Ansatzteil 4 frei gedreht werden, wobei ein möglichst geringer Spalt 9 zwischen der unteren Fläche des Diebstahlsicherungskopfs 8 und der oberen Fläche des Senkkopfs 3 gebildet wird, um ein Einschieben eines hebelartigen Werkzeugs, wie z.B. eines Schraubendrehers, zum Hochhebeln des Diebstahlsicherungskopfs 8 zu verhindern. In gleichem Abstand von der Drehachse sind gleichmäßig verteilte Durchgangsbohrungen parallel zur Drehachse im Diebstahlsicherungskopf 8 vorgesehen, die zur Aufnahme von vier Stiften 10 vorgesehen sind. Diese Stifte 10 weisen oben jeweils ein kopfartiges Ende auf, das als Justierwerkzeug-Ansatzteil 11 ausgebildet ist. Dieses ist im Diebstahlsicherungskopf 8 versenkt, um einen gewaltsamen Zugriff zu den Stiften 10 zu verhindern. Die Justierwerkzeug-Ansatzteile 11 weisen am oberen Ende eine Öffnung 12 zum Eingriff eines Codierwerkzeugs auf, wobei die Öffnungen 12 im dargestellten Ausführungsbeispiel einen dreieckigen Querschnitt aufweisen. Die Justierung mittels eines Codierwerkzeugs wird unten noch näher erläutert. Weiterhin weisen die ansonsten konischen Stifte 10 im unteren Bereich einen nichtrunden Querschnitt auf, beispielsweise einen sechskantigen oder zahnradähnlichen Querschnitt, mit dem sie im montierten Zustand durch entsprechend geformte Bohrungen von Sperrscheiben 13 hindurchgesteckt sind, wodurch eine drehfeste Verbindung hergestellt ist. Die Sperrscheiben 13 sind drehbar in entsprechend geformten flachen Ausnehmungen bzw. Ausfräsungen im Diebstahlsicherungskopf 8 gelagert. Die im wesentlichen zylindrischen Sperrscheiben 13 weisen an einer Stelle ihres Umfangs jeweils einen runden Einschnitt 14 auf, dessen Radius dem des Werkzeug-Ansatzteils 4 entspricht. Diese Sperrscheiben 13 greifen in die Ringnut 6 des Werkzeug-Ansatzteils 4 ein und verriegeln dadurch den Diebstahlsicherungskopf 8. Lediglich in einer Position, in der sämtliche kreisförmigen Einschnitte 14 radial nach innen weisen, gelangen die Sperrscheiben 13 außer Eingriff mit dem Werkzeug-Ansatzteil 4, und der Diebstahlsicherungskopf 8 kann von diesem abgezogen werden. Schon eine sehr geringfügige Verdrehung auch nur eines einzigen Stifts 10 führt wieder zur Verriegelung, das heißt, nur in einer einzigen, sehr exakt einzustellenden Position jeweils aller Stifte 10 kann der Diebstahlsicherungskopf 8 abgenommen werden.

Die unteren Enden der Stifte 10 ragen in eine Ausnehmung 15 am unteren Ende des Diebstahlsicherungskopfs 8, die beispielsweise auch so ausgebildet sein kann, daß Schrauben mit anderen Köpfen, wie z.B. Linsen-, Zylinder- oder Halbrundköpfen, verwendet werden können, wobei der Diebstahlsicherungskopf 8 nach wie vor umfangsseitig einen sehr geringen Spalt zur Platte 1 hin bildet. Die äußeren, unteren Kanten des Diebstahlsicherungskopfs 8 sind dabei so stark dimensioniert, daß eine Beschädigung ausgeschlossen erscheint. Die in die Ausnehmung 15 eintauchenden Bereiche der Stifte 10 weisen umfangsseitig Ringnuten auf, in die ein Federring 16 radial von innen her eingreift und die Stifte 10 federnd nach außen drückt, um ihre Lage nach Art einer Bremse zu stabilisieren. Gleichzeitig dient der Federring 16 als Sperre, die das Herausziehen der Stifte 10 von oben her verhindert.

An der Oberseite des Diebstahlsicherungskopfs 8 ist mittig ein Abziehzapfen 17 angeordnet, der eine Querbohrung 18 aufweist, um ein Abziehwerkzeug, beispielsweise einen Haken, aufzunehmen. Mit diesem Haken kann der Diebstahlsicherungskopf 8 nach erfolgter Justierung auch dann abgezogen werden, wenn er versenkt oder schwer zugänglich angeordnet ist. Dieser Abziehzapfen 17 dient gleichzeitig zur Zentrierung einer Codierscheibe, wie später noch näher erläutert wird. Ein weiterer Zapfen 19 dient zur Justierung dieser Codierscheibe.

Anstelle der dargestellten Sperrscheiben 13 können selbstverständlich auch Sperrglieder mit anderer Gestalt treten, wobei lediglich maßgeblich ist, daß ihr Außenumfang nicht kreisförmig, sondern so unregelmäßig ist, daß sie in wenigstens einer Winkelposition außer Eingriff mit dem Werkzeug-Ansatzteil 4 gelangen. Weiterhin kann auch eine feste Verbindung zwischen den Stiften 10 und diesen Sperrscheiben 13 vorgesehen sein. Schließlich ist die Zahl der Stifte nicht auf die dargestellte Anordnung beschränkt, es müssen jedoch mindestens zwei Stifte vorgesehen sein, um die erwünschte Sicherheit zu erzielen. Die Zahl nach oben ist lediglich durch den zur Verfügung stehenden Platz begrenzt.

In einer einfacheren Ausführungsform ist es auch möglich, anstelle eines am Schraubenkopf angeformten Werkzeug-Ansatzteils den gesamten Schraubenkopf zylindrisch zu verlängern und entsprechend als Werkzeug-Ansatzteil auszubilden.

Die Herstellung des Diebstahlsicherungskopfs 8 kann z.B. dadurch erfolgen, daß zunächst die Sackbohrung und die Durchgangsbohrungen eingebracht werden. Danach wird der Diebstahlsicherungskopf 8 etwa in der Mitte in einer Ebene senkrecht zur Drehachse durchgetrennt, so daß entsprechende kreiszylinderförmige Einfräsungen für die Sperrscheiben 13 hergestellt werden können. Danach werden die beiden Teile wieder zusammengefügt und mittels einer Schweißnaht 20 verschweißt. Diese kann anschließend wieder abgedreht oder abgeschliffen werden.

Es ist jedoch auch prinzipiell möglich, den Diebstahlsicherungskopf 8 einstückig herzustellen, wobei dann die Einfräsungen für die Sperrscheiben 13 durch die Sackbohrung erfolgen, die dann entsprechend im Hinblick auf die Gestalt der Sperrscheiben dimensioniert werden muß.

Zur Montage werden zunächst die Sperrscheiben 13 eingesetzt und dann die Stifte 10 von oben her eingesteckt und schließlich mit dem Federring 16 gesichert. Ist der Querschnitt im unteren Bereich der Stifte 10 symmetrisch ausgebildet, kann durch verschiedenartiges Einstecken der Stifte 10 in die Sperrscheiben 13 eine unterschiedliche Codierung erreicht werden. Diese kann dann beispielsweise auch nachträglich noch auf einfache Weise verändert werden.

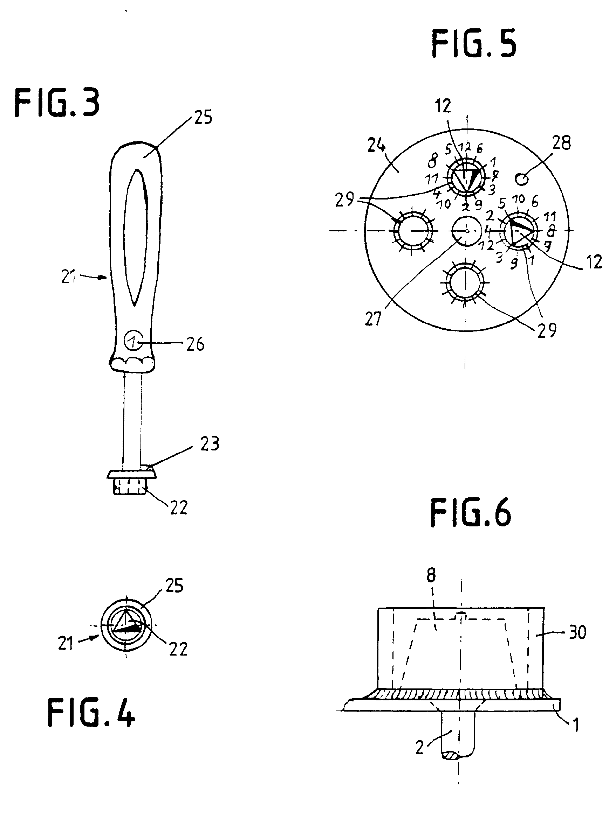

Zur Einstellung der Codierung dient das in den Fig. 3 und 4 dargestellte Codierwerkzeug 21, das nach Art eines Schraubendrehers ausgebildet ist. Das zum Eingriff in das Justierwerkzeug-Ansatzteil 11 dienende Ende ist entsprechend ausgebildet, im dargestellten Fall als Dreikant 22. Hierbei kann es sich entweder um einen Dreikant mit ungleicher Kantenlänge handeln, so daß nur eine einzige Eingriffsposition besteht, oder es ist ein gleichseitiger Dreikant und eine entsprechende Einsetzmarkierung vorgesehen. Das Codierwerkzeug 21 weist eine Codiernase 23 auf, die in Übereinstimmung mit entsprechenden Markierungen auf der Oberseite des Diebstahlsicherungskopfs 8 oder mit vorgesehenen Positionen der in Fig. 5 dargestellten Codierscheibe 24 zu bringen ist. Dabei besitzt das Codierwerkzeug 21 an seinem Griff 25 eine Zahlenmarkierung 26, die die Codierung der Codiernase 23 beinhaltet. Hierdurch kann eine Vielzahl von ähnlichen Codierwerkzeugen 21 hergestellt werden, wobei jeweils nur ein einziges zur Herstellung der jeweiligen Codierung bzw. Decodierung geeignet ist. Bei Verwendung der in Fig. 5 dargestellten Codierscheibe 24 wird diese zunächst mittels der Bohrungen 27 und 28 auf den Diebstahlsicherungskopf 8 aufgesetzt, wobei der Abziehzapfen 17 und der Zapfen 19 in diese Bohrungen 27, 28 eingreifen. Nun werden sämtliche Sperrscheiben 13 in die entsicherte Position gebracht, und mittels des Codierwerkzeugs 21 wird nun die Codierung bestimmt, indem dieses Codierwerkzeug 21 nacheinander in alle Öffnungen 12 der Justierwerkzeug-Ansatzteile 11 eingesetzt wird. Mittels der Codiernase 19 werden dann anhand der Zahlenmarkierungen auf der Codierscheibe 24 die vier Codierungen bestimmt, so daß sich eine vierstellige Zahl als Codierung ergibt. Nimmt man noch die Codierzahl des Codierwerkzeugs 21 selbst und eventuell eine Zahlencodierung auf der Rückseite der Codierscheibe 24 hinzu, so ergibt sich eine sechsstellige Codierzahl. Nach Verstellung der Stifte 10 wird dann ein ganz bestimmtes Codierwerkzeug 21 und eine ganz bestimmte Codierscheibe 24 benötigt, um mittels der Codierzahl den Diebstahlsicherungskopf 8 zu lösen. Bei vier dargestellten Durchgriffsöffnungen 29 auf der Codierscheibe 24 für das Codierwerkzeug 21 sind zur Vereinfachung der Darstellung nur zwei mit vollständigen Skalenmarkierungen versehen.

Der Diebstahlsicherungskopf 8 soll vorzugsweise versenkt angeordnet werden. Wo dies nicht möglich ist, kann auch gemäß Fig. 6 ein Schutzrohr 30 um den Anbringungsort des Diebstahlsicherungskopfs 8 auf der Platte 1 oder einem sonstigen zu sichernden Gegenstand angeschweißt werden, um einen gewaltsamen Zugriff zum Diebstahlsicherungskopf 8 zu erschweren.

Selbstverständlich kann der Diebstahlsicherungskopf sehr variabel bezüglich Gestalt und Größe hergestellt werden, je nachdem, welche Schraubengröße oder welcher Einsatzort gewählt wird. Auch können gleichartige Diebstahlsicherungsköpfe für verschiedenartige Schrauben eingesetzt werden, sofern diese mit denselben Werkzeug-Ansatzteilen versehen sind. Hierbei kann es sich um Schrauben mit Links- oder Rechtsgewinde handeln.

Da der Diebstahlsicherungskopf so dicht wie möglich bei möglichst kleinem Spalt auf der Platte 1 bzw. dem zu sichernden Gegenstand angeordnet sein sollte, ist es erforderlich, daß vor allem im Falle von Senkkopfschrauben die Einsenkung möglichst präzise erfolgt. Besonders geeignet hierfür ist daher ein Senkwerkzeug mit einem Anschlag zur Begrenzung der Senktiefe.

Als zusätzliche Sicherung kann noch eine elektrische oder elektronische Sicherung vorgesehen sein, durch die beim Abschlagen des Schutzrohrs 30, des Diebstahlsicherungskopfs 8 oder des Werkzeug-Ansatzteils 4 ein elektrischer Kontakt ausgelöst wird, der zum Alarm führt.

## Patentansprüche

1. Schraube mit Diebstahlsicherungskopf, der mit einer ein im wesentlichen zylindrisch ausgebildetes, von der Schraube ausgehendes Werkzeug-Ansatzteil aufnehmenden Bohrung versehen ist, dadurch gekennzeichnet, daß im Diebstahlsicherungskopf (8) im wesentlichen parallel neben der Bohrung wenigstens zwei drehbar gelagerte Stifte (10) angeordnet sind, die jeweils mit einem in eine Ringnut (6) am Werkzeug-Ansatzteil (4) durch Drehung des zugeordneten Stifts (10) einschwenkbaren Sperrglied (13) drehfest verbunden sind, wobei der obere, von außen zugängliche Endbereich der Stifte (10) als Justierwerkzeug-Ansatzteil (11) ausgebildet ist.

2. Diebstahlsicherungskopf nach Anspruch 1, dadurch gekennzeichnet, daß die Bohrung als Sackbohrung ausgebildet ist.

3. Diebstahlsicherungskopf nach einem der vorhergehenden Ansprüche, dadurch gekennzeichnet, daß das von der Schraube (2) ausgehende Werkzeug-Ansatzteil (4) als Schraubenkopf oder Fortsatz des Schraubenkopfes (3) ausgebildet ist, wobei die Verbindungsstelle des als Fortsatz ausgebildeten Werkzeug-Ansatzteiles (4) mit dem Schraubenkopf vorzugsweise (3) als Sollbruchstelle (5) ausgebildet ist.

4. Diebstahlsicherungskopf nach Anspruch 3, dadurch gekennzeichnet, daß der Schraubenkopf ein Linsen-, Zylinder- oder Halbrundkopf ist und daß der Diebstahlsicherungskopf mit einer den über eine Befestigungsebene überstehenden Bereich des Schraubenkopfes aufnehmenden Ausnehmung versehen ist, oder daß der Schraubenkopf (3) ein Senkkopf ist.

5. Diebstahlsicherungskopf nach einem der vorhergehenden Ansprüche, dadurch gekennzeichnet, daß die Sperrglieder (13) als in entsprechenden Ausnehmungen im Diebstahlsicherungskopf (8) gelagerte Scheiben ausgebildet sind, die je eine randseitige Aussparung (14) aufweisen, wobei die Entriegelungsposition nur bei radial zur Drehachse des Diebstahlsicherungskopfs weisenden Aussparungen (14) vorliegt, wobei die Aussparungen (14) insbesondere einen Radius aufweisen, der im wesentlichen dem des Werkzeug-Ansatzteiles (4) entspricht.

6. Diebstahlsicherungskopf nach einem der vorhergehenden Ansprüche, dadurch gekennzeichnet, daß in den Sperrgliedern (13) Durchstecköffnungen für die Stifte (10) vorgesehen sind, wobei die Durchstecköffnungen und die diesen im Quer schnitt angepaßten Stifte im Durchsteckbereich einen von der Kreisform abweichenden Querschnitt aufweisen, der insbesondere als regelmäßiges Vieleck ausgebildet ist.

7. Diebstahlsicherungskopf nach einem der vorhergehenden Ansprüche, dadurch gekennzeichnet, daß die Stifte (10) mit einer ständig wirkenden Bremse (16) versehen sind.

8. Diebstahlsicherungskopf nach Anspruch 7, dadurch gekennzeichnet, daß die Bremse (16) als an allen Stiften (10) anliegender Federring ausgebildet ist, der vorzugsweise radial von innen in Ringnuten der Stifte (10) eingreift.

9. Diebstahlsicherungskopf nach einem der vorhergehenden Ansprüche, dadurch gekennzeichnet, daß das Justierwerkzeug-Ansatzteil an den Stiften (10) als im Diebstahlsicherungskopf versenkter Kopf ausgebildet ist und/oder daß das Justierwerkzeug-Ansatzteil (11) mit einer Justier-Vielkantöffnung (12) versehen ist, die vorzugsweise ungleiche Kanten aufweist.

10. Diebstahlsicherungskopf nach Anspruch 9, dadurch gekennzeichnet, daß er mit Codiermarkierungen für die Justierwerkzeug-Ansatzteile (11), insbesondere Codierskalen, versehen ist, oder daß eine entsprechende Markierungen tragende Codierscheibe (24) vorgesehen ist, wobei vorzugsweise eine Justiervorrichtung (17, 19) für die Codierscheibe (24) vorgesehen ist.

11. Diebstahlsicherungskopf nach einem der vorhergehenden Ansprüche, dadurch gekennzeichnet, daß er an seiner von der Schraube (2) abgewandten Seite mit einem vorzugsweise als Zentriervorrichtung für die Codierscheibe (24) ausgebildeten Abziehzapfen (17) versehen ist.

12. Diebstahlsicherungskopf nach einem der vorhergehenden Ansprüche, dadurch gekennzeichnet, daß er als gehärtetes Stahlteil und/oder kreiskegelstumpfförmig ausgebildet ist.

13. Diebstahlsicherungskopf nach einem der vorhergehenden Ansprüche, dadurch gekennzeichnet, daß er von einem mit der Befestigungsebene fest verbundenen, insbesondere angeschweißten Schutzrohr (30) umgeben oder versenkt ist.

## Claims

1. A screw with a theft protection head, said theft protection head having a bore which receives a substantially cylindrically constructed tool extension part extending from the screw, characterised by at least two rotatably supported pins (10) arranged substantially parallel next to the bore in the theft protection head (8), said pins (10) each being connected rotationally fixed to a respective locking member (13), each said locking member (13) being insertable into an annular groove (6) on the tool extension part (4) by rotating the associated said pin (10), an upper end area of the pins (10), which upper end area is accessible from outside said theft protection head, being constructed as an adjusting tool adapter part (11).

2. A theft protection head according to Claim 1, characterised in that the bore is constructed as a blind hole.

3. A theft protection head according to any of the preceding Claims, characterised in that the tool extension part (4) on the screw (2) is constructed as one of a screw head and an extension of the screw head (3), wherein the tool extension part (4) is constructed as an extension of the screw head and is connected thereto preferably by a breaking point structure (5).

4. A theft protection head according to Claim 3, characterised in that the screw head is one of a fillister, cylinder and semicircular head, and in that the theft protection head is provided with a recess receiving the area of the screw head projecting over a fastening plane, or in that the screw head (3) is a countersunk head.

5. A theft protection head according to any of the preceding Claims, characterised in that the locking members (13) are constructed as disks supported in corresponding recesses in the theft protection head (8), which disks each have a recess (14) on a peripheral edge thereof, with an unlocking position existing only when the recesses (14) point radially toward the axis of rotation of the theft protection head.

6. A theft protection head according to any of the preceding Claims, characterised by through openings for the pins (10) provided in the locking members (13), with the pins being adapted to conform with said through openings and having in the through opening area a not circular cross section constructed in particular as a regular polygon.

7. A theft protection head according to any of the preceding Claims, characterised in that the pins (10) are provided with a constantly acting brake (16).

8. A theft protection head according to Claim 7, characterised in that the brake (16) is constructed as a spring ring resting on all of said pins (10), wherein the spring ring preferably extends radially outwardly from inside said pins into annular grooves of the pins (10).

9. A theft protection head according to any of the preceding Claims, characterised in that the adjusting tool adapter part on the pins (10) is constructed as a head countersunk in the theft protection head and/or in that the adjusting tool adapter part (11) is provided with an adjusting polyhedral opening (12), which preferably has edges of unequal length.

10. A theft protection head according to Claim 9, characterised by one of coding markings thereon in particular in the form of coding scales for the adjusting tool adpater parts (11) and a coding disk (24) carrying suitable coding markings, wherein preferably an adjusting device (17, 19) for adjusting the coding disk (24) is provided on said theft protection head.

11. A theft protection head according to any of the preceding Claims, characterised by a pulling-off peg (17) provided on a side of the theft protection head opposite the screw (2), wherein the pulling-off peg (17) is constructed preferably as a centering device for the coding disk (24).

12. A theft protection head according to any of the preceding Claims, characterised in that the theft protection head is constructed as a hardened steel part and/or as a part having a circular, truncated cone-shaped structure.

13. A theft protection head according to any of the preceding Claims, characterised in that the theft protection head is surrounded or countersunk by a protecting tube (3) fixedly connected to a fastening plane, in particular welded together.


## Revendications

1. Boulon à tête antivol munie d'un perçage recevant une partie d'engagement d'un outil, de réalisation sensiblement cylindrique et partant du boulon, caractérisé par le fait qu'au moins deux chevilles (10) montées rotatives et disposées, dans la tête antivol (8), pour l'essentiel parallèlement à côté du perçage, sont respectivement assujetties en rotation à un organe de verrouillage (13) pouvant pénétrer par pivotement, suite à une rotation de la cheville associée (10), dans une gorge annulaire (6) pratiquée dans la partie (4) d'engagement d'outil, la région extrême supérieure des chevilles (10), accessible de l'extérieur, étant réalisée sous la forme d'une partie (11) d'engagement d'un outil de réglage.

2. Tête antivol selon la revendication 1, caractérisée par le fait que le perçage est conçu comme un trou borgne

3. Tête antivol selon l'une des revendications précédentes, caractérisée par le fait que la partie (4) d'engagement d'outil, partant du boulon (2), est réalisée sous la forme d'une tête de vis ou d'un prolongement de la tête (3) de la vis, la zone de solidarisation, entre la tête (3) de la vis et la partie (4) d'engagement d'outil réalisée en tant que prolongement, étant de préférence conçue comme une zone (5) à rupture programmée.

4. Tête antivol selon la revendication 3, caractérisée par le fait que la tête de la vis est une tête lentiforme, cylindrique ou semi-circulaire ; et par le fait que la tête antivol est pourvue d'un évidement logeant la région de la tête de la vis faisant saillie au-delà d'un plan de fixation ; ou par le fait que la tête (3) de la vis est une tête fraisée.

5. Tête antivol selon l'une des revendications précédentes, caractérisée par le fait que les organes de verrouillage (13) sont conçus sous la forme de disques qui sont logés dans des évidements correspondants, ménagés dans la tête antivol (8), et présentent chacun une échancrure marginale (14), la position de déverrouillage étant occupée uniquement lorsque les échancrures (14) sont orientées radialement par rapport à l'axe de rotation de la tête antivol, et lesdites échancrures (14) présentant notamment un rayon qui correspond, pour l'essentiel, à celui de la partie (4) d'engagement d'outil.

6. Tête antivol selon l'une des revendications précédentes, caractérisée par le fait que des orifices d'enfichage des chevilles (10) sont prévus dans les organes de verrouillage (13), les orifices d'enfichage et les chevilles, dont la section transversale est adaptée auxdits orifices, présentant dans la région d'enfichage une section transversale s'écartant de la forme ronde et conçue, en particulier, sous la forme d'un polygone régulier.

7. Tête antivol selon l'une des revendications précédentes, caractérisée par le fait que les chevilles (10) sont dotées d'un frein (16) à action permanente.

8. Tête antivol selon la revendication 7, caractérisée par le fait que le frein (16) est réalisé en tant que bague élastique appliquée contre toutes les chevilles (10) et s'engageant préférentiellement de l'intérieur, dans le sens radial, dans des gorges annulaires desdites chevilles (10).

9. Tête antivol selon l'une des revendications précédentes, caractérisée par le fait que la partie d'engagement d'un outil de réglage est réalisée, sur les chevilles (10), sous la forme d'une tête encaissée dans la tête antivol ; et/ou par le fait que la partie (11) d'engagement d'un outil de réglage est munie d'un orifice polygonal de réglage (12) qui comporte, de préférence, des arêtes dissemblables.

10. Tête antivol selon la revendication 9, caractérisée par le fait qu'elle est pourvue de repères de codage pour les parties (11) d'engagement d'un outil de réglage, en particulier d'échelles graduées de codage ; ou par le fait qu'il est prévu un disque de codage (24) portant des repères correspondants avec, de préférence, la présence d'un dispositif (17, 19) de réglage dudit disque de codage (24).

11. Tête antivol selon l'une des revendications précédentes, caractérisée par le fait qu'elle est dotée, sur sa face tournée à l'opposé du boulon (2), d'un tenon de déboîtement (17) réalisé, de préférence, sous la forme d'un dispositif de centrage du disque de codage (24).

12. Tête antivol selon l'une des revendications précédentes, caractérisée par le fait qu'elle est conçue sous la forme d'une pièce en acier trempé et/ou de configuration tronconique circulaire.

13. Tête antivol selon l'une des revendications précédentes, caractérisée par le fait qu'elle est ceinturée ou escamotée par un tube protecteur (30) relié rigidement au plan de fixation, et notamment rapporté par soudage.

# FIG.1

# FIG.2

FIG.3

FIG.5

FIG.6

FIG.4